(19) Europäisches Patentamt

**European Patent Office**

Office européen des brevets

(11) Veröffentlichungsnummer : **0 036 963**
**B1**

(12) **EUROPÄISCHE PATENTSCHRIFT**

(45) Veröffentlichungstag der Patentschrift :
08.02.84

(21) Anmeldenummer : 81101569.2

(22) Anmeldetag : 05.03.81

(51) Int. Cl.³ : **F 16 L 47/02, B 29 C 27/02**

(54) **Schweissmuffe für thermoplastische Materialien, Verfahren und Vorrichtung zu deren Herstellung.**

(30) Priorität : 31.03.80 CH 2531/80

(43) Veröffentlichungstag der Anmeldung :
07.10.81 Patentblatt 81/40

(45) Bekanntmachung des Hinweises auf die Patenterteilung : 08.02.84 Patentblatt 84/06

(84) Benannte Vertragsstaaten :
**AT BE DE FR GB IT NL**

(56) Entgegenhaltungen :
**WO-A-79 /010 18**
**CH-A-  396 536**
**CH-A-  457 647**
**CH-A-  529 628**
**CH-A-  544 906**
**DE-A- 1 479 231**
**DE-A- 2 053 938**
**DE-A- 2 302 458**
**FR-A- 2 246 351**
**FR-A- 2 345 652**
**GB-A- 1 035 036**
**US-A- 3 285 289**

(73) Patentinhaber : **GEORG FISCHER AKTIENGESELL-**
**SCHAFT**
**Mühlentalstrasse 105**
**CH-8201 Schaffhausen (CH)**

(72) Erfinder : **Thalmann, Alfred**
**Schnydergasse 104**
**CH-8448 Uhwiesen (CH)**

**Schweissmuffe für thermoplastische Materialien, Verfahren und Vorrichtung zu deren Herstellung**

Die Erfindung betrifft eine Schweissmuffe nach dem Oberbegriff von Anspruch 1, ein Verfahren zur Herstellung der Schweissmuffe und eine Vorrichtung zur Durchführung des Verfahrens.

Eine, dem Oberbegriff entsprechende Schweissmuffe ist durch die CH-A-396 536 bekanntgeworden, wobei die Wicklung in ein Spritzwerkzeug eingelegt und beim Spritzen des Ringkörpers in diesen eingebettet und dadurch festgehalten wird. Derartige, auf eine komplizierte Art hergestellte Schweissmuffen weisen zwar durch den unmantelten Widerstandsdraht und die teilweise umspritzte Wicklung eine gute Sicherheit gegenüber Kurzschlüssen und gegenüber Unfällen bei der Handhabung der unter Spannung stehenden Schweissmuffe ohne eingesteckte Rohrleitungselemente auf, doch ist die Qualität der Schweissverbindung bei handelsüblichen Rohren eher ungenügend. Die handelsüblichen Rohre weisen teilweise grosse Ovalität und weite Mass-Toleranzen des Aussendurchmessers auf. Um solche Rohre problemlos in die Muffe einschieben zu können, muss der Innendurchmesser der Wicklung und somit auch die Bohrung der Muffe entsprechend gross ausgeführt sein. Das Schrumpf-Vermögen einer, auf vorgenannte Art hergestellten, auf Fertigmass gespritzten Muffe, liegt bei ca. 1,5 %. Dies führt in der Praxis dazu, dass bei dem effektiv erforderlichen Spiel zwischen Muffe und Rohr und vor allem bei Paarung von Extrem-Toleranzen kein genügender Schweissdruck am Umfang entsteht, wodurch keine guten Schweissverbindungen erzielt werden.

Um derartige Toleranzen ausgleichen zu können und einen genügenden Schweissdruck zu erzeugen, ist es bekannt, die Ringkörper durch ein Warmrecken vorher aufzuweiten. Hierbei werden radiale Schrumpfspannungen im Ringkörper eingefroren, welche bei Erwärmung der Schweissmuffe durch den Widerstandsdraht frei werden und eine Schrumpfung der Schweissmuffe hervorrufen.

Durch die CH-A-544 906 ist eine Schweissmuffe bekanntgeworden, welche derartig aufgeweiteten extrudierten Ringkörper aufweist. Diese Schweissmuffe ist jedoch mit einem blanken Widerstandsdraht versehen, welcher in eine nach dem Aufweiten am Innendurchmesser durch Einschneiden hergestellte Nute eingelegt wird. Es hat sich gezeigt, dass dabei durch die nachträgliche Bearbeitung ein Teil der eingebrachten Schrumpfspannungen verlorengeht, bzw. nicht mehr zielgerichtet frei werden.

Nachteilig ist ausserdem, dass durch den nur eingelegten blanken Widerstandsdraht die Sicherheit bei der Handhabung mit elektrischem Strom nicht gewährleistet ist und dass die Herstellung der Schweissmuffe durch die mechanische Bearbeitung und das Einbringen des Widerstandsdrahtes in die Nute sehr kompliziert und aufwendig ist.

Weiterhin ist durch die DE-A-2 302 458 ein Verfahren zur Herstellung einer Schweissmuffe bekanntgeworden, bei welchem ein nicht ummantelter Heizdraht mit erforderlichem Windungsabstand auf an einem Dorn angeordnete Kernmantelsegmente aufgebracht wird und in einen an der Aussenwand erwärmten thermoplastischen Rohrabschnitt bei Aufweitung desselben durch eine kegelige Fläche des Dorns eingebracht wird. Durch eine Heizung im Dorn wird dann die Innenwand auf ca. 180° erhitzt wodurch eine Verbindung des blanken Heizdrahtes mit dem Rohrstück erfolgt. Durch diese Aufheizung werden jedoch die im Rohrstück vorhandenen Schrumpfspannungen zum Grösstenteil freigesetzt und stehen somit nicht für die Ueberbrückung grösserer Rohrtoleranzen bei der Herstellung der Schweissverbindung zur Verfügung.

Bei der in der WO-A-79/01018 dargestellten Schweissmuffe wird der Widerstandsheizdraht durch eine Materialpartie am Innendurchmesser des thermoplastischen Rohrstücks abgedeckt, wobei diese durch elektrische Wärmeerzeugung in dem Widerstandsheizdraht bis zum Fliessen des Materials in dessen Umgebung und Eindringen der Windungen in das Material entsteht. Anstelle der abdeckenden Materialpartie kann auch ein kunststoffummantelter Heirdraht verwendet werden, dessen Ummantelung bei der Herstellung der Schweißmuffe sich gegenseitig und auch mit dem umgebenden Rohrstück durch Materialfließen verbindet. Hierbei werden ebenfalls die im Rohrstück vorhandenen Schrumpfspannungen freigesetzt, was zu den beschriebenen Nachteilen führt.

Aufgabe der vorliegenden Erfindung ist es, eine Schweissmuffe und ein Verfahren zu deren Herstellung zu schaffen, mittels welcher einwandfreie Schweissverbindungen auch bei Rohren mit Durchmessertoleranzen herstellbar sind, welche einen geeigneten Berührungsschutz und durch ein einfaches und betriebssicheres Herstellungsverfahren eine gleichbleibende Qualität aufweist. Die erfindungsgemässe Vorrichtung zur Durchführung des Verfahrens soll ausserdem eine automatische Herstellung der Schweissmuffe ermöglichen.

Erfindungsgemäss wird diese Aufgabe durch eine Schweissmuffe mit den im kennzeichnenden Teil von Anspruch 1 angegebenen Merkmalen, durch die im Anspruch 4 angegebenen Verfahrensmerkmale und durch die im Anspruch 9 angegebenen Vorrichtungsmerkmale gelöst.

Das gegenseitige Verschweissen der aus einem ummantelten Heizleiter bestehenden einzelnen Windungen der Wicklung ergibt eine kompakte Wicklung, die durch Einschrumpfen mit dem Ringkörper fest verbunden ist.

Dies ergibt eine kompakte Schweissmuffe, deren Windungen einerseits in engem Kontakt mit dem Muffenkörper stehen und andererseits so nah wie möglich an dem Aussendurchmesser der zu verschweissenden Rohrteile zu liegen kommen und trotzdem einen einwandfreien Berührungschutz aufweisen, wobei eine einfache Handhabung der Schweissmuffe gewährleistet ist.

Die eingefrorenen radialen Schrumpfspannungen bleiben bis zum Verschweissen mit den Rohrteilen erhalten und stehen dann ganz für die Ueberbrückung des Spieles zwischen Muffe und Rohrteil und zur Erzeugung eines Schweissdruckes zur Verfügung.

Das gleichzeitige Aufweiten des Ringkörpers und Aufschieben auf die Wicklung ermöglicht das Einbringen von radialen Schrumpfspannungen in den Ringkörper, eine gute Verbindung von Wicklung und Ringkörper und eine schnelle und problemlose Herstellung der Schweissmuffe ausserhalb der Spritzgussmaschine. Dies wird auch durch die vorangehende Verschweissung der Windungen der Wicklung ermöglicht.

Die zur Durchführung des Verfahrens vorgesehene erfindungsgemässe Vorrichtung gewährleistet ein einwandfreies Aufweiten des Ringkörpers bei gleichzeitigem Ueberschieben über die Wicklung und ermöglicht eine automatische Herstellung der erfindungsgemässen Schweissmuffe.

Weitere vorteilhafte Ausgestaltungen der Schweissmuffe, des Verfahrens und der Vorrichtung sind durch die abhängigen Ansprüche 2, 4 bis 7 und 9 bis 15 gekennzeichnet.

Die Erfindung ist in den beiliegenden Zeichnungen anhand eines Ausführungsbeispieles dargestellt und nachfolgend beschrieben.

Es zeigen :

Figur 1 einen Längsschnitt durch eine Schweissmuffe zur Verbindung zweier Rohre aus thermoplastischem Material, und

Figur 2 bis 7 verschiedene Verfahrensschritte bei der Herstellung einer Schweissmuffe und die dafür erforderliche Vorrichtung in vereinfachter Darstellung.

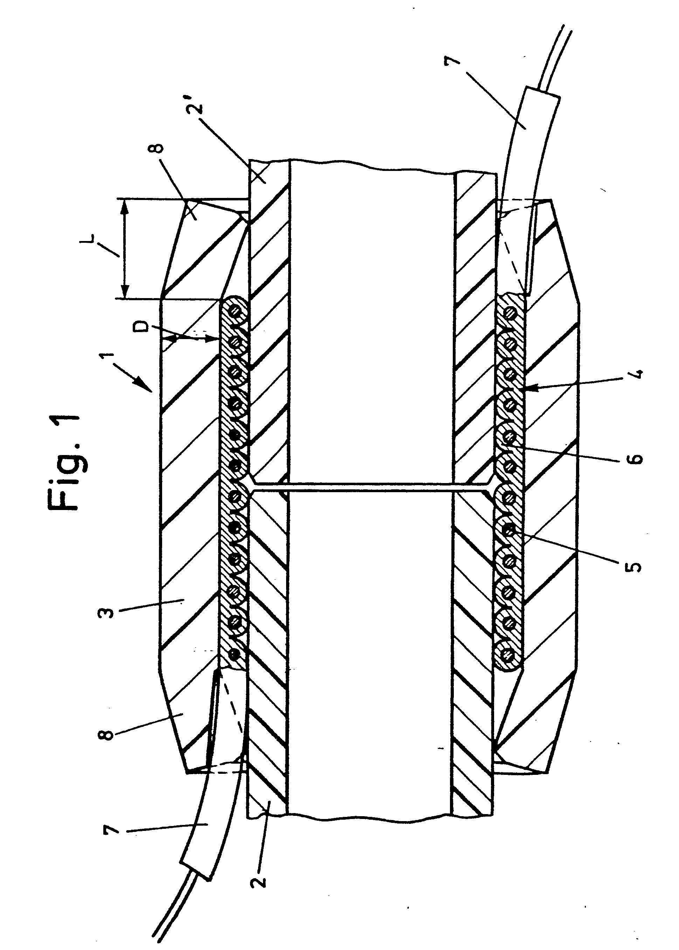

Die in Fig. 1 gezeigte Schweissmuffe 1 zum Verbinden von Rohren 2 und 2' aus thermoplastischem Material besteht aus einem Ringkörper 3 und einer Wicklung 4.

Die Wicklung 4 besteht aus einem spiralförmig gewundenen Widerstandsdraht 5 welcher mit einer Ummantelung 6 aus thermoplastischem Material versehen ist. Für die Ummantelung wird das gleiche oder ein artverwandtes thermoplastisches Material verwendet wie für den Ringkörper 3 und die Rohre 2 und 2'. Der mit der im Querschnitt vorzugsweise runden Ummantelung 6 versehene Widerstandsdraht 5 wird so gewickelt, dass sich die einzelnen Windungen berühren. Während oder nach dem Wickeln werden die einzelnen Windungen miteinander durch Schweissung, vorzugsweise am äusseren Umfang, miteinander fest verbunden, wodurch eine kompakte Wicklung 4 entsteht. Der Widerstandsdraht ist vorzugsweise monofil gewickelt wobei je ein Drahtende 7 zum Anschluss an eine Stromquelle an den Enden des Ringkörpers 3 herausgeführt ist. Durch die beschriebene kompakte Wicklung 4 wird eine hohe spezifische Heizleistung erreicht, was einwandfreie Schweissverbindungen gewährleistet.

Bei einer bifilaren Wicklung können beide Drahtenden an einer Seite der Schweissmuffe angeordnet sein.

Zur Herstellung der Schweißmuffe wird die Wicklung 4 in den erwärmten aufgeweiteten Ringkörper 3 eingeschoben, wobei durch den unmittelbar nachfolgenden Teil-Schrumpfungsprozess eine feste Verbindung zwischen der Wicklung 4 und dem Ringkörper 3 entsteht. Vorzugsweise erfolgt das Aufweiten des Ringkörpers zusammen mit dem Einschieben der Wicklung 4.

Beim Aufweiten hat der Ringkörper 3 eine Temperatur, welche 20 bis 40 °C unterhalb der Temperatur des Kristallitschmelzbereiches des verwendeten thermoplastischen Materials liegt. Der Ringkörper 3 wird entweder im Spritzgussverfahren oder aus Rohrstücken, teilweise oder ganz mechanisch bearbeitet hergestellt, wobei in diesem bereits Schrumpfspannungen unterschiedlicher Richtung eingefroren sind. Durch das Aufweiten im Durchmesser bei der angeführten Temperatur werden die in radialer Richtung wirkenden Schrumpfspannungen wesentlich vergrössert. Vorzugsweise wird der Ringkörper in einem Bereich von 3 % bis 12 % des Masses des Innendurchmessers aufgeweitet und zwar soweit, dass er gerade über den Aussendurchmesser der Wicklung 4 geschoben werden kann. Entsprechend diesem Mass wird der Ringkörper-Rohling 3 im Innendurchmesser kleiner hergestellt. Beim Teil-Schrumpfungsprozess, bei welchem die Verbindung zwischen Wicklung 4 und Ringkörper 3 entsteht werden ca. 30 % der im Ringkörper vorhandenen Schrumpfspannungen freigesetzt, die restlichen ca. 70 % bleiben in der Muffe bis zum Verschweissen mit den Rohren 2, 2' eingefroren.

Die Wicklung 4 ist kürzer ausgebildet als der Ringkörper 3, wobei die über die Wicklung hinausgehenden beidseitig gleich langen Enden 8 des Ringkörpers 3 kegelförmig im Durchmesser abnehmend ausgebildet sind. Der kleinste Innendurchmesser des Ringkörpers 3 ist hierbei gleich gross oder geringfügig grösser als der Innendurchmesser der Wicklung 4, wodurch am Ringkörper 3 eine Führungspartie zum problemlosen Aufschieben der Schweissmuffe auf den zu verschweissenden rohrförmigen Teil 2, 2' entsteht und dabei gleichzeitig die Wicklungsdrähte gegen Verschieben und Beschädigen geschützt werden. Nach dem Verschweissen ergeben diese Enden eine zusätzliche Zentrierung und abstützung ausserhalb des Schweissbereiches.

Die kegelige Ausbildung entsteht durch den Teil-Schrumpfungsprozess, wobei zum Erreichen des gewünschten kleinsten Innendurchmessers die Länge L der Enden 8 mindestens das 1,5 fache der Wanddicke D des Ringkörpers 3 betragen sollte.

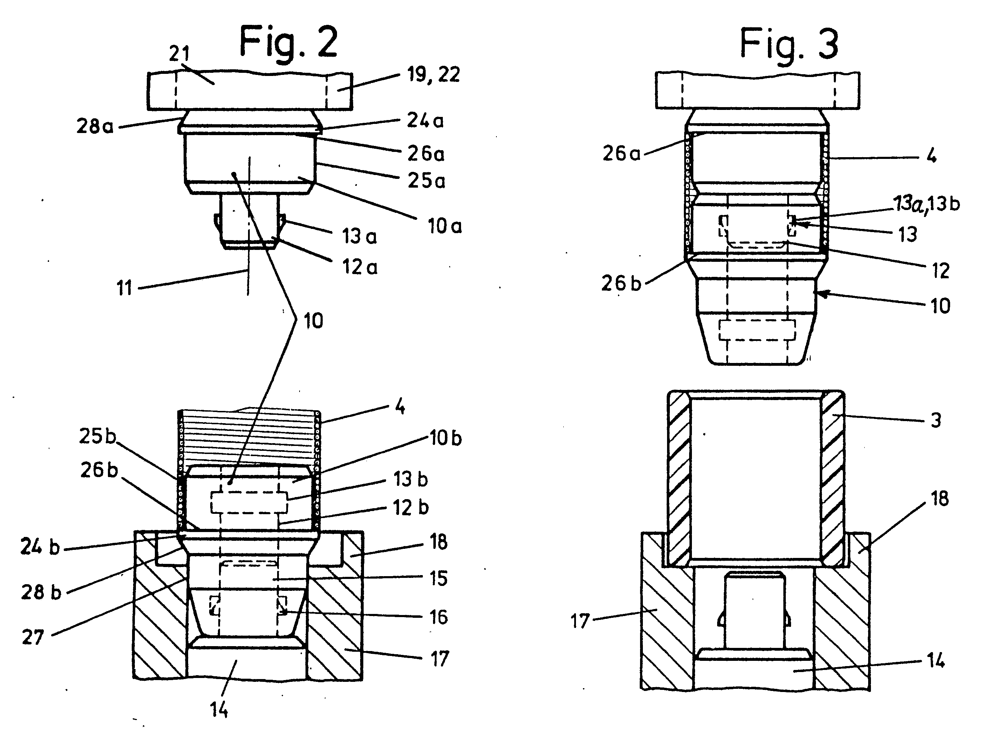

Die Fig. 2 bis 7 zeigen die Herstellung der Schweissmuffe 1 in verschiedenen Verfahrensschritten mit der dafür erforderlichen Vorrich-

tung.

Wie aus der Fig. 2 und 3 ersichtlich, weist die Vorrichtung einen Dorn 10 auf, welcher durch eine Teilung quer zur Längsachse 11 aus zwei Dornhälften 10a und 10b besteht. Der Dorn 10 ist vorzugsweise mit seiner Längsachse 11 vertikal angeordnet, wobei die obere Dornhälfte 10a mit einem Dornhalter 21 fest verbunden ist. Selbstverständlich sind auch horizontale oder schräge Anordnungen des Dornes möglich.

Beide Dornhälften 10a, 10b sind mittels einer Zentrierung 12 und einer Verriegelungseinrichtung 13 miteinander zentrisch verbindbar. Die Zentrierung 12 besteht aus einem an der oberen Dornhälfte 10a angeordneten Zapfen 12a und einer an der unteren Dornhälfte angeordneten Zentrierbohrung 12b. Die Verriegelungseinrichtung 13 weist beispielsweise am Zapfen 12a angeordnete, radial bewegliche Verriegelungsnocken 13a auf, welche in eine in der unteren Dornhälfte 10b angeordnete Nute 13b einrasten. Die untere Dornhälfte 10b ist mit einem axial bewegbaren Dornträger 14 ebenfalls durch eine gleich ausgebildete Zentrierung 15 und Verriegelungseinrichtung 16 verbindbar. Koaxial zum Dornträger 14 ist eine oder mehrere axial verschiebbare Druckhülse 17 bzw. Hülsen angeordnet, welche einen Zentrierabsatz 18 für den Ringkörper 3 aufweist.

Jede Dornhälfte 10a, 10b weist einen Bund 24a, 24b und eine zylindrische Partie 25a, 25b zur Aufnahme der Wicklung 4 auf, wobei die Wicklung 4 durch die Anlageflächen 26a, 26b der beiden Bunde 24a, 24b axial gehalten wird.

Der Aussendurchmesser des Bundes 24a, 24b ist mindestens gleich oder geringfügig grösser als der Aussendurchmesser der Wicklung 4.

An der unteren Dornhälfte 10b ist eine weitere zylindrische Partie 27 angeordnet, deren Aussendurchmesser geringfügig kleiner ist als der Innendurchmesser des vorgefertigten Ringkörpers 3.

Zwischen dieser zylindrischen Partie 27 und dem Bund 24b ist eine kegelige Fläche 28b angeordnet, welche einen Aufweit-Kegel für den Ringkörper 3 bildet.

Eine entsprechende kegelige Fläche 28a ist am oberen Dorn 10a zwischen dem Bund 24a und dem Dornhalter 21 angeordnet.

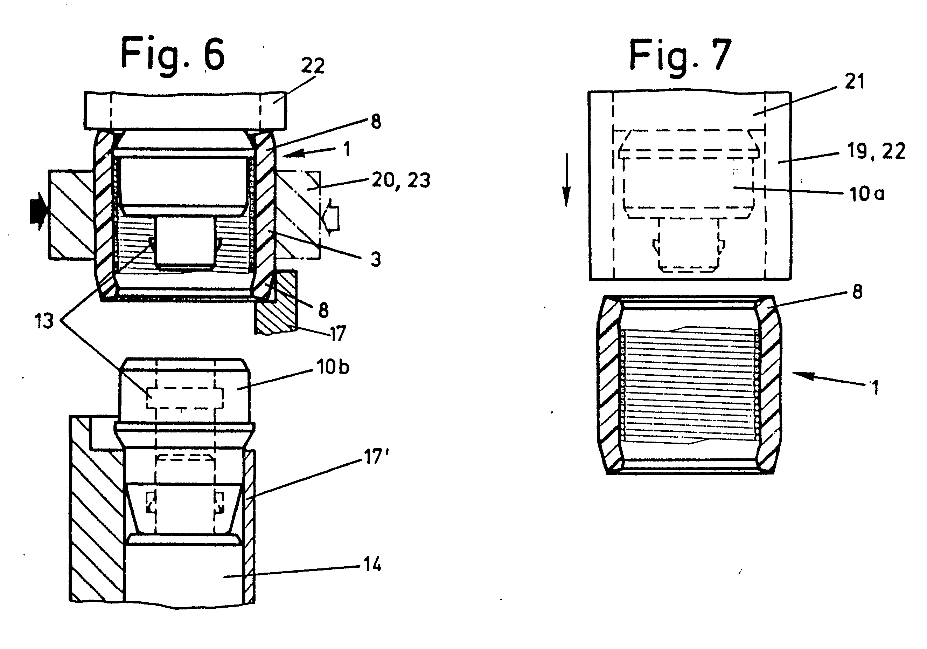

An der Vorrichtung ist noch eine Abstreifeinrichtung 19 und eine Halteeinrichtung 20 (siehe Fig. 6 und 7) für die Schweissmuffe 1 angeordnet. Die Abstreifeinrichtung 19 weist eine konzentrisch zum Dornhalter 21 bzw. oberen Dornhälfte 10a angeordnete axial verschiebbare Hülse 22 auf. Die Halteeinrichtung 20 (Fig. 7) weist mindestens zwei, quer zur Längsachse 11 des Dornes 10 verschiebbare Backen 23 auf.

Die Herstellung der Schweissmuffe 1 erfolgt entsprechend den nachfolgend beschriebenen Verfahrensschritten.

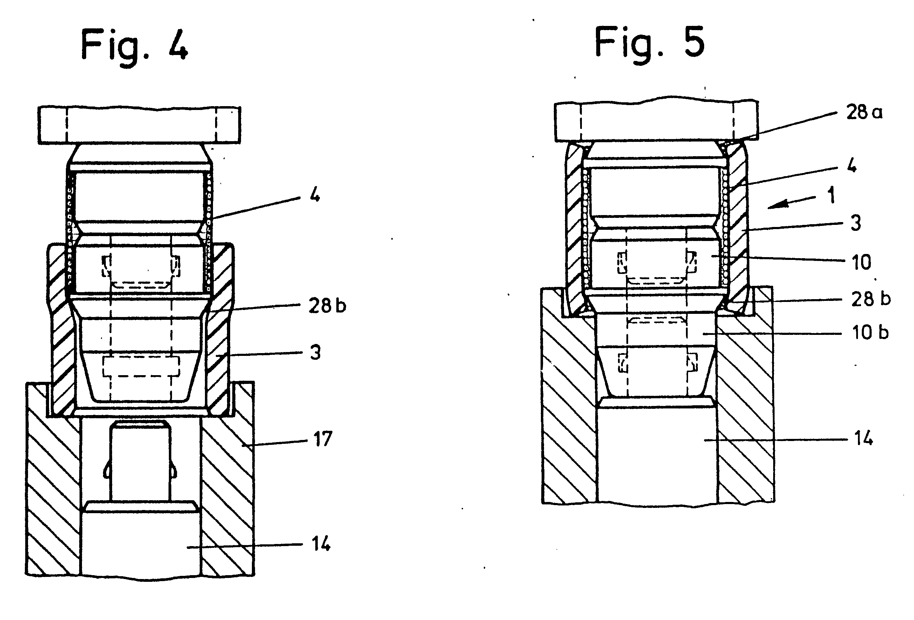

Die fertig gewickelte und verschweisste kompakte Wicklung 4 wird auf die untere Dornhälfte 10b gesteckt. Zu diesem Zweck befindet sich der Dornträger 14 mit der unteren Dornhälfte 10b und die Druckhülse 17 in einer unteren Ausgangsstellung (siehe Fig. 2). Anschliessend fährt der Dornträger 14 nach oben, wobei die Wicklung 4 teilweise auf die obere Dornhälfte 10a geschoben wird (siehe Fig. 3). Gleichzeitig werden die beiden Dornhälfen 10a und 10b in zentrierter Lage mittels der Verriegelungseinrichtung 13 miteinander fest verbunden. Nachdem die federnden Verriegelungsnocken 13a in die Nute 13b eingerastet sind, wird die Verriegelungseinrichtung 16 zwischen der unteren Dornhälfte 10b und dem Dornträger 14 gelöst und der Dornträger in die unterste Stellung abgesenkt. Der erwärmte Ringkörper 3 wird dann entsprechend Fig. 3 in den Zentrierabsatz 18 der Druckhülse 17 gestellt und anschliessend, wie aus Fig. 4 ersichtlich, mittels der Druckhülse 17 nach oben gehoben, wobei der Ringkörper 3 durch die kegelige Fläche 28b aufgeweitet und gleichzeitig über die Wicklung 4 geschoben wird.

Die über die Wicklung 4 hinausgehenden Enden 8 des Ringkörpers 3 gemäss Fig. 5, sind in der aufgeschobenen Endlage aufgrund der kegeligen Flächen 28a und 28b vom Dorn 10 freigestellt so dass sich die noch warmen Enden 8 sofort zurück stellen und dann während einer Abkühlzeit in einer kegelförmig verkleinernden Form bleiben.

Gleichzeitig entsteht durch die Teil-Schrumpfung eine feste Verbindung zwischen der Wicklung 4 und dem Ringkörper 3. Die Schweissmuffe 1 bleibt solange in der in Fig. 5 gezeigten Lage, bis der Ringkörper 3 eine Temperatur erreicht hat, welche 30° bis 80 °C unterhalb der Temperatur des Kristallitschmelzbereiches des Materials liegt.

Während dieser Abkühlzeit wird der Dornträger 14 nach oben bewegt und durch die Verriegelungseinrichtung 16 fest mit der unteren Dornhälfte 10b verbunden. Bei gleichzeitigem Festhalten der Schweissmuffe 1 mittels der Backen 23 der Haltevorrichtung 20 wird gemäss Fig. 6 (linke Hälfte) die Druckhülse 17 und nach vorangehender Lösung der Verriegelungseinrichtung 13 der Dornträger 14 zusammen mit der unteren Dornhälfte 10b abgesenkt. Hierbei weitet sich das eine Ende 8 aufgrund des noch warmen Ringkörpers 3 kurzseitig auf, schnappt aber sofort wieder kegelig zusammen.

Nach dem Oeffnen der Halte-Vorrichtung 20 und nach Betätigung der Abstreifeinrichtung 19 wird gemäss Fig. 7 durch Absenken der Hülse 22 die fertige Schweissmuffe 1 von der oberen Dornhälfte 10a abgestreift und fällt z. B. in einen darunter angeordneten Behälter.

Wie in Fig. 6 rechte Hälfte dargestellt, kann auch auf die Haltevorrichtung 20 mit den Backen 23 verzichtet werden und die Schweissmuffe 1 zwischen der Hülse 22 und der Druckhülse 17 gehalten werden. Hierbei ist es jedoch erforderlich dass die Druckhülse 17 einen getrennt verschiebbaren inneren Führungsteil 17' aufweist und über die untere Dornhälfte 10b schiebbar ist.

Beim Abstreifen wird das andere Ende 8 des Ringkörpers ebenfalls wie bereits beschrieben nochmals kurzzeitig aufgeweitet und nimmt dann durch das Rückstellvermögen die in Fig. 1 und 7 dargestellte und beschriebene Form wieder ein.

Die hier beschriebene Vorrichtung kann für Einzelfertigung für Handbetrieb ausgebildet sein. Für eine Serienfertigung ist der Dornträger 14, die Druckhülse 17, die Abstreifeinrichtung 19, die Halteeinrichtung 20 und die beiden Verriegelungseinrichtungen 13 und 16 mit elektrischen, pneumatischen oder hydraulischen Antrieben versehen, welche mit einer automatischen Folgesteuerung wirkverbunden sind. Gleichzeitig kann das Einlegen der Wicklung 4 und des Ringkörpers 3 mittels Robotern erfolgen, was eine vollautomatische Arbeitsweise ermöglicht.

Wird der Ringkörper 3 im Spritzgussverfahren hergestellt, kann dieser mit der beschriebenen erforderlichen Temperatur aus der Spritzform entnommen werden und direkt oder nach kurzzeitigem Konditionieren in einem Temperatur-geregelten Zwischenmagazin z. B. mittels eines Roboters in die Vorrichtung eingelegt werden.

Dadurch wird eine Energie sparende Fertigung erreicht.

Selbstverständlich kann der Ringkörper 3 auch aus extrudierten Rohren hergestellt werden, welche allerdings durch die Längsorientierung des Materiales beim Extrudieren andere Voraussetzungen zum Aufweiten und damit zu erzielende eingefrorene radiale Schrumpfungsspannungen im Ringkörper ergeben.

Die erfindungsgemässe Schweissmuffe ist ausser zur Verbindung von Rohren auch zur Verbindung von Formteilen wie z. B. Fittings oder Armaturen aus thermoplastischem Material mit Rohren oder anderen Formteilen geeignet, sofern diese einen rohrförmigen Stutzen aufweisen.

Bei besonders Oxydations-empfindlichen Materialien, kann das ganze Herstell-Verfahren oder Teile desselben unter Stickstoff, $CO_2$ oder Schutzgas-Ueberdruck erfolgen. Gleichfalls können die fertigen Muffen sofort nach der Herstellung in verschweissbare Folienbeutel abgefüllt werden.

Die Schweissmuffe ist für die Verbindung aller schweissbaren thermoplastischen Materialien wie z. B. Polyaethylen, Polypropylene usw. geeignet wobei deren Teile ausser dem Widerstandsdraht ebenfalls aus den gleichen Materialien hergestellt sind.

**Ansprüche**

1. Elektrisch heizbare Schweissmuffe (1) zum Verbinden von rohrförmigen Teilen (2, 2') aus thermoplastischem Material mit einem Ringkörper (3) aus thermoplastischem Material und einer an dessen Innenfläche angeordneten, schraubenlinienförmig verlaufenen Wicklung (4) aus mit thermoplastischem Material (6) ummantelten Widerstandsdraht (5), die kürzer als der Ringkörper (3) ausgebildet ist und deren nach aussen geführte Enden (7) zum Anschliessen an eine Stromquelle bestimmt sind, dadurch gekennzeichnet, dass die Ummantelung (6) jeder Windung der Wicklung (4) durch Verschweissung mit der Ummantelung der nächstfolgenden Windung fest verbunden ist und so eine kompakte Hülse bildet, dass die Wicklung (4) durch ein partielles Einschrumpfen mit dem Ringkörper (3) fest verbunden ist, dass der Ringkörper (3) eine eingefrorene latente radiale Rest-Schrumpfspannung aufweist, die bei seiner Erwärmung beim Schweissvorgang das radiale Spiel zwischen der Wicklung (4) und den rohrförmigen Teilen (2, 2') eliminiert und einen Schweissdruck erzeugt und dass die beidseits über die Wicklung (4) hinausgehenden Enden (8) des Ringkörpers (3) kegelförmig nach innen eingebogen sind, wobei der kleinste Innendurchmesser der Enden (8) gleich gross oder geringfügig grösser als der Innendurchmesser der Wicklung (4) ist.

2. Schweissmuffe nach Anspruch 1, dadurch gekennzeichnet, dass die Länge (L) der über die Wicklung (4) hinausgehenden Enden (8) des Ringkörpers (3) mindestens dem 1,5 fachen der Wandstärke (D) des Ringkörpers (3) entspricht.

3. Verfahren zur Herstellung der Schweissmuffe (1) nach Anspruch 1 oder 2, dadurch gekennzeichnet, dass die einzelnen Windungen beim Herstellen der Wicklung (4) miteinander verschweisst werden, dass der erwärmte Ringkörper (3) aufgeweitet und gereckt und gleichzeitig die verschweißte Wicklung (4), die auf einem Dorn (10) mit kegeligen Flächen (28a, 28b) zu beiden Seiten der Wicklung gehalten wird, in den Ringkörper (3) eingeschoben wird, wobei der Aufweitvorgang bei einer Temperatur des Ringkörpers (3) von 20° bis 40 °C unterhalb der Temperatur des Kristallitschmelzbereiches erfolgt, und dass die Schweissmuffe (1) nach einem teilweisen Kühl- und Schrumpfungsprozess, wobei die über die Wicklung (4) hinausgehenden Enden (8) des Ringkörpers (3) in kegeliger Form an den Flächen (28a, 28b) einschrumpfen, vom Dorn (10) abgestreift wird.

4. Verfahren nach Anspruch 3, dadurch gekennzeichnet, dass der Ringkörper (3) vor dem Aufweiten konditioniert und im erwärmten Zustand zwischengelagert wird.

5. Verfahren nach einem der Ansprüche 3 oder 4 mit einem im Spritzverfahren hergestellten Ringkörper, dadurch gekennzeichnet, dass das Aufweiten des Ringkörpers (3) und Einschieben der Wicklung (4) unmittelbar nach dem Spritzvorgang des Ringkörpers erfolgt und dass der Ringkörper (3) mit der für den Aufweitvorgang erforderlichen Temperatur aus der Spritzgussform entnommen wird.

6. Verfahren nach einem der Ansprüche 3 bis 5, dadurch gekennzeichnet, dass die Schweissmuffe (1) noch im warmen Zustand in einem Temperaturbereich von 30 °C bis 80 °C unterhalb der Temperatur des Kristallitschmelzbereiches vom Dorn (10) abgestreift wird.

7. Vorrichtung zur Durchführung des Verfahrens gemäss einem der Ansprüche 3 bis 6, gekennzeichnet durch einen, die Wicklung (4) aufnehmenden Dorn (10), der beiderseits der Wicklung (4) sich im Durchmesser kegelig verkleinernde Partien (28a, 28b) aufweist, welche zur Aufweitung des Ringkörpers (3) und/oder zur Freistellung der Enden (8) des Ringkörpers (3) dient, und mindestens einer, konzentrisch zum Dorn (10) angeordneten und in axialer Richtung relativ zu diesem verschiebbaren Druckhülse (17) zum Aufschieben des erwärmten Ringkörpers (3) auf den die Wicklung (4) tragenden Dorn (10).

8. Vorrichtung nach Anspruch 7, dadurch gekennzeichnet, dass der Dorn (10) quer zur Längsachse (11) zweiteilig ausgebildet ist, dass die eine Dornhälfte (10b) mittels einer Zentrierung (15) und Verriegelungseinrichtung (16) mit einem axial bewegbaren Dornträger (14) verbindbar ist, dass die Dornhälften (10a, 10b) von und zueinander bewegbar und durch eine Zentrierung (12) und eine Verriegelungseinrichtung (13) miteinander verbindbar sind und dass jede Dornhälfte (10a, 10b) einen Bund (24a, 24b) aufweist, zwischen welchen die Wicklung (4) axial gehalten ist.

9. Vorrichtung nach Anspruch 8, dadurch gekennzeichnet, dass der Aussendurchmesser jedes Bundes (24a, 24b) mindestens dem Aussendurchmesser der Wicklung (4) entspricht, und dass jede der kegeligen Partien (28a, 28b) ausgehend vom Aussendurchmesser des Bundes (24a, 24b) sich verjüngt.

10. Vorrichtung nach einem der Ansprüche 7 bis 9, dadurch gekennzeichnet, dass eine konzentrisch zum Dorn (10) angeordnete und axial verschiebbare Hülse (22) als Teil einer Abstreifeinrichtung (19) für die fertige Schweissmuffe (1) angeordnet ist.

11. Vorrichtung nach einem der Ansprüche 7 bis 10, dadurch gekennzeichnet, dass eine Haltevorrichtung (20) angeordnet ist, welche die Schweissmuffe (1) auf deren Umfang umgreifen kann und mindestens zwei quer zur Längsachse (11) des Dornes (10) verschiebbare Backen (23) aufweist.

12. Vorrichtung nach einem der Ansprüche 7 bis 11, dadurch gekennzeichnet, dass die Druckhülse (17) einen Zentrierabsatz (18) zur Aufnahme des Ringkörpers (3) aufweist.

13. Vorrichtung nach einem der Ansprüche 7 bis 12, dadurch gekennzeichnet, dass der Dornträger (14), die Druckhülse (17), die Abstreifeinrichtung (19) die Haltevorrichtung (20) und die Verriegelungseinrichtungen (13, 16) mit elektrischen bzw. hydraulischen bzw. pneumatischen Antrieben versehen sind, welche mit einer automatischen Folgesteuerung wirkverbunden sind.

14. Vorrichtung nach einem der Ansprüche 7 bis 13, dadurch gekennzeichnet, dass für die Konditionierung der Ringkörper (3) vor deren Verarbeitung ein Temperatur reguliertes Zwischen-Magazin vorgesehen ist.

**Claims**

1. Electrically heatable welding sleeve (1) for connecting tubular parts (2, 2') of thermoplastic material to an annular body (3) of thermoplastic material and a winding (4) of resistance wire (5) sheathed with thermoplastic material (6), which is arranged on the inner surface of said annular body (3) and extends along the lines of a helix and is shorter than the annular body (3) and whose outwardly guided ends (7) are intended for connecting to a current source, characterised in that the sheathing (6) of each turn of the winding (4) is permanently connected by welding to the sheathing of the next turn, thus forming a compact sleeve, in that the winding (4) is permanently connected by partial shrinkage to the annular body (3), in that the annular body (3) has a frozen-in, latent radial residual shrinkage stress, which, when the annular body (3) is heated, eliminates the radial play between the winding (4) and the tubular parts (2, 2') and establishes a welding pressure, and in that the ends (8) of the annular body (3) projecting on both sides beyond the winding (4) are bent conically inwards, the smallest inner diameter of the ends (8) being the same size as or slightly larger than the inner diameter of the winding (4).

2. Welding sleeve according to claim 1, characterised in that the length (L) of the ends (8) of the annular body (3) projecting beyond the winding (4) corresponds to at least 1.5 times the wall thickness (D) of the annular body (3).

3. Process for manufacturing the welding sleeve (1) according to claim 1 or 2, characterised in that the individual turns are welded together when the winding (4) is manufactured, in that the heated annular body (3) is expanded and stretched, and at the same time the welded winding (4), which is held on a mandrel (10) with conical surfaces (28a, 28b) on both sides of the winding, is pushed into the annular body (3), the expanding process being effected at a temperature of the annular body (3) of 20° to 40 °C below the temperature of the crystallite melting range, and in that the welding sleeve (1) is peeled away from the mandrel (10) after a partial cooling and shrinking process, the ends (8) of the annular body (3) projecting beyond the winding (4) shrinking conically on to the surfaces (28a, 28b).

4. Process according to claim 3, characterised in that the annular body (3) is conditioned before expanding and is stored temporarily in the heated state.

5. Process according to one of the claims 3 or 4 with an annular body manufactured in the injection moulding method, characterised in that the expansion of the annular body (3) and pushing-in of the winding (4) is effected directly after the injection process of the annular body, and in that the annular body (3) is removed from the injection moulding form at the temperature necessary for the expanding process.

6. Process according to one of the claims 3 to 5, characterised in that the welding sleeve (1) is peeled away from the mandrel (10) still in the heated state in a temperature range from 30° to 80° below the temperature of the crystallite melting range.

7. Device for carrying out the process according to one of the claims 3 to 6, characterised by a mandrel (10) receiving the winding (4), which has on both sides of the winding (4) parts (28a, 28b) whose diameter tapers conically, and which serves to expand the annular body (3) and/or to release the ends (8) of the annular body (3), and at least one pressure sleeve (17), arranged concentrically to the mandrel (10) and displaceable in an axial direction relative to it, for pushing the heated annular body (3) on to the mandrel (10) carrying the winding (4).

8. Device according to claim 7, characterised in that the mandrel (10) is designed in two parts across the longitudinal axis (11), in that one half (10b) of the mandrel can be connected by means of a centering device (15) and locking device (16) to an axially movable mandrel carrier (14), in that the mandrel halves (10a, 10b) can be moved towards and away from each other and are connectable to each other by a centering device (12) and a locking device (13), and in that each half of the mandrel (10a, 10b) has a collar (24a, 24b), between which the winding (4) is held axially.

9. Device according to claim 8, characterised in that the outer diameter of each collar (24a, 24b) corresponds at least to the outer diameter of the winding (4), and in that each of the conical parts (28a, 28b) tapers starting from the outer diameter of the collar (24a, 24b).

10. Device according to one of the claims 7 to 9, characterised in that an axially displaceable sleeve (22) arranged concentrically to the mandrel (10) is provided as part of a stripping device (19) for the finished welding sleeve (1).

11. Device according to one of the claims 7 to 10, characterised in that a holding device (20) is provided, which can surround the circumference of the welding sleeve (1) and has at least two jaws (23) displaceable across the longitudinal axis (11) of the mandrel (10).

12. Device according to one of the claims 7 to 11, characterised in that the pressure sleeve (17) has a centering shoulder (18) for receiving the annular body (3).

13. Device according to one of the claims 7 to 12, characterised in that the mandrel carrier (14), the pressure sleeve (17), the stripping device (19), the holding device (20) and the locking devices (13, 16) are provided with electrical, respectively hydraulic, respectively pneumatic drives, which are operatively connected to an automatic sequence control.

14. Device according to one of the claims 7 to 13, characterised in that a temperature-regulated temporary storage place is provided for conditioning the annular body (3) before it is processed.

## Revendications

1. Manchon de soudage (1) pouvant être chauffé électriquement, destiné à assembler deux pièces tubulaires (2, 2′) en matière thermoplastique, comprenant un corps tubulaire (3) en matière thermoplastique et un enroulement (4), fait d'un fil résistant (5) enrobé d'une matière thermoplastique (6), disposé contre la surface interne du corps, qui s'étend selon la forme d'une ligne hélicoïdale, qui est réalisé plus court que le corps annulaire (3) et dont les extrémités (7) qui émergent à l'extérieur sont destinées à être connectées à une source de courant, caractérisé en ce que l'enrobage (6) de chaque spire de l'enroulement (4) est solidement assemblé à l'enrobage de la spire suivante et forme ainsi une douille compacte, en ce que l'enroulement (4) est solidement assemblé au corps annulaire (3) par une contraction partielle, en ce que le corps annulaire (3) présente une contrainte de contraction résiduelle radiale latente gelée qui, lors de l'échauffement produit au moment du soudage, élimine le jeu radial entre l'enroulement (4) et les pièces tubulaires (2, 2′) et produit une pression de soudage et en ce que les extrémités (8) du corps tubulaire (2) qui débordent de part et d'autre au-delà de l'enroulement (4) sont resserrées en cône vers l'intérieur, le diamètre intérieur minimum des extrémités (8) étant de même dimension ou légèrement plus grand que le diamètre intérieur de l'enroulement (4).

2. Manchon de soudage selon la revendication 1, caractérisé en ce que la longueur (L) des extrémités (8) du corps annulaire (3) qui débordent au-delà de l'enroulement (4) correspond au moins à 1,5 fois l'épaisseur de paroi (D) du corps annulaire (3).

3. Procédé de fabrication du manchon de soudage (1) selon la revendication 1 ou 2, caractérisé en ce que les spires individuelles sont soudées l'une à l'autre lors de la fabrication de l'enroulement (4), que le corps annulaire (3) est chauffé et étiré, et qu'en même temps, l'enroulement (4) soudé qui est tenu sur un mandrin (10) muni de surfaces coniques (28a, 28b) de part et d'autre de l'enroulement, est emmanché dans le corps annulaire (3), le processus d'élargissement se produisant à une température du corps annulaire (3) qui est inférieure de 20 °C à 40 °C à la température de l'intervalle de fusion cristalline et en ce que le manchon de soudage (1) est arraché du mandrin (10) après un processus de refroidissement et de contraction partielle, dans lequel les extrémités (8) du corps annulaire (3) qui émergent au-delà de l'enroulement (4) se contractent en s'appliquant contre les surfaces (28a, 28b), en prenant une forme conique.

4. Procédé selon la revendication 3, caractérisé en ce que le corps annulaire (3) est conditionné avant l'élargissement et soumis à un stockage intermédiaire à l'état chauffé.

5. Procédé selon l'une des revendications 3 et 4, comportant un corps annulaire fabriqué par le procédé de moulage par injection, caractérisé en ce que l'élargissement du corps annulaire (3) et l'emmanchement de l'enroulement (4) se produisent immédiatement après le processus de moulage par injection du corps annulaire et en ce que le corps annulaire (3) est extrait du moule de moulage par injection à la température nécessaire pour le processus d'élargissement.

6. Procédé selon l'une des revendications 3 à 5, caractérisé en ce que le manchon de soudage (1) est arraché du mandrin (10) alors qu'il est encore à l'état chaud dans un intervalle de température de 30 °C à 80 °C au-dessous de la température de l'intervalle de fusion cristalline.

7. Appareil pour la mise en œuvre du procédé selon l'une des revendications 3 à 6, caractérisé par un mandrin (10) qui reçoit l'enroulement (4), qui présente, de part et d'autre de l'enroulement (4), des parties (28a, 28b) qui se rétrécissent en cône en diamètre, ce mandrin servant à l'élargissement du corps annulaire (3) et/ou à libérer les extrémités (8) du corps annulaire (3) et par au moins une douille de pression (17) disposée concentriquement au mandrin (10) et qui peut être déplacée en translation dans la direction axiale par rapport à ce mandrin, pour exécuter l'emmanchement du corps annulaire chauffé (3) sur le mandrin (10) qui porte l'enroulement (4).

8. Appareil selon la revendication 7, caractérisé en ce que le mandrin (10) est réalisé en deux parties, avec division transversalement à l'axe longitudinal (11), en ce que l'un des demi-mandrins (10b) peut être relié à un porte-mandrin (14) pouvant se déplacer axialement, au moyen d'un centrage (15) et d'un dispositif de verrouillage (16), en ce que les demi-mandrins (10a, 10b) peuvent être éloignés et rapprochés l'un de l'autre et peuvent être assemblés l'un à l'autre par un centrage (12) et un dispositif de verrouillage (13) et en ce que chaque demi-mandrin (10a, 10b) présente un épaulement (24a, 24b), l'enroulement (4) étant maintenu dans la direction axiale entre ces épaulements.

9. Appareil selon la revendication 8, caractérisé en ce que le diamètre extérieur de chaque épaulement (24a, 24b) correspond au moins au diamètre extérieur de l'enroulement (4) et en ce que chacune des parties coniques (28a, 28b) se rétrécit en partant du diamètre extérieur de l'épaulement (24a, 24b).

10. Appareil selon l'une des revendications 7 à 9, caractérisé en ce qu'une douille (22) disposée concentriquement au mandrin (10) et pouvant se déplacer dans la direction axiale est montée en tant que partie d'un dispositif de dévêtissage (19) pour le manchon de soudage fini (1).

11. Appareil selon l'une des revendications 7 à 10, caractérisé en ce qu'il est prévu un dispositif de retenue (20) qui peut enserrer le manchon de soudage (1) sur sa périphérie et présente au moins deux mâchoires (23) qui peuvent se déplacer transversalement à l'axe longitudinal (11) du mandrin (10).

12. Appareil selon l'une des revendications 7 à 11, caractérisé en ce que la douille de pression (17) présente un collet de centrage (18) destiné à recevoir le corps annulaire (3).

13. Appareil selon l'une des revendications 7 à 12, caractérisé en ce que le porte-mandrin (14), la douille de pression (17), le dispositif de dévêtissage (19), le dispositif de retenue (20) et les dispositifs de verrouillage (13, 16) sont munis d'entraînements électriques, hydrauliques ou pneumatiques qui sont reliés fonctionnellement à une commande séquentielle automatique.

14. Appareil selon l'une des revendications 7 à 13, caractérisé en ce que, pour le conditionnement du corps annulaire (3), il est prévu, avant le travail de ce corps, un magasin intermédiaire à régulation de température.

# Fig. 1

Fig. 3

Fig. 2

Fig. 5

28a 4 1 3 10 28 b 10 b 14

Fig. 4

4 28b 3 17 14

3

Fig. 7

Fig. 6